# EUROPEAN PATENT SPECIFICATION

(11) **EP 4 313 865 B1**
(45) Date of publication and mention of the grant of the patent: **07.05.2025**
(21) Application number: 22716085.0
(22) Date of filing: 29.03.2022
(51) Int. Cl.: C01C 1/04

(54) **USE OF THE PURGE GAS OF A FIRST AMMONIA CONVERTER FOR REDUCING THE CATALYST OF A SECOND AMMONIA CONVERTER AND METHOD AND SYSTEM THEREOF**
VERWENDUNG DES SPÜLGASES EINES ERSTEN AMMONIAKKONVERTERS ZUR REDUKTION DES KATALYSATORS EINES ZWEITEN AMMONIAKKONVERTERS UND VERFAHREN UND SYSTEM DAFÜR
UTILISATION DU GAZ DE PURGE D'UN PREMIER CONVERTISSEUR D'AMMONIAC POUR RÉDUIRE LE CATALYSEUR D'UN SECOND CONVERTISSEUR D'AMMONIAC ET PROCÉDÉ ET SYSTÈME ASSOCIÉS

(30) Priority: 29.03.2021 EP 21165492
(43) Date of publication of application: 07.02.2024
(73) Proprietor: Yara International ASA, 0277 Oslo (NO)
(72) Inventor: GHAFOOR, Faisal, 3090 Overijse (BE); DE GEEST, Hanne, 9000 Gent (BE); RAMIC, Armin, 1200 Brussel (BE); VAES, Frederick, 9940 Kluizen (BE)
(74) Representative: De Clercq & Partners
(86) International application number: PCT/EP2022/058208
(87) International publication number: WO 2022/207604

(56) References cited:
- EP-A1- 3 127 892
- CN-A- 105 435 861
- CN-A- 108 499 492
- US-A- 3 787 335
- US-A- 4 568 531
- US-A- 5 523 483
- US-B2- 10 040 692

## Description

### Field

The present disclosure relates to the chemical reduction of the catalyst of an ammonia converter, through the use of the purge gas of another ammonia converter, and to a method and a system thereof.

### Background

Ammonia is a compound of nitrogen and hydrogen with the formula NH₃. A stable binary hydride, and the simplest nitrogen hydride, ammonia is a colorless gas with a characteristic pungent smell. It is a common nitrogenous waste, particularly among aquatic organisms, and it contributes significantly to the nutritional needs of terrestrial organisms by serving as a precursor to food and fertilizers. Ammonia, either directly or indirectly, is also a building block for the synthesis of many pharmaceutical products and is used in many commercial cleaning products. It is mainly collected by downward displacement of both air and water.

A typical modern ammonia-producing plant first converts natural gas (i.e., methane) or LPG (liquefied petroleum gases such as propane and butane) or petroleum naphtha into gaseous hydrogen. The method for producing hydrogen from hydrocarbons is known as steam reforming. The hydrogen is then combined with nitrogen to produce ammonia via the Haber-Bosch process.

Starting with a natural gas feedstock, the first step of the process used in producing the hydrogen is to remove sulfur compounds from the feedstock, because sulfur deactivates the catalysts used in subsequent steps. Sulfur removal requires catalytic hydrogenation to convert sulfur compounds in the feedstocks to gaseous hydrogen sulfide:

H₂ + RSH → RH + H₂S (gas)

The gaseous hydrogen sulfide is then adsorbed and removed by passing it through beds of zinc oxide where it is converted to solid zinc sulfide:

H₂S + ZnO → ZnS + H₂O

Catalytic steam reforming of the sulfur-free feedstock is then used to form hydrogen plus carbon monoxide:

CH₄ + H₂O → CO + 3H₂

The next step then uses catalytic shift conversion to convert the carbon monoxide to carbon dioxide and more hydrogen:

CO + H₂O → CO₂ + H₂

The carbon dioxide is then removed either by absorption in aqueous ethanolamine solutions or by adsorption in pressure swing adsorbers (PSA) using proprietary solid adsorption media.

The final step in producing the hydrogen is to use catalytic methanation to remove any small residual amounts of carbon monoxide or carbon dioxide from the hydrogen:

CO + 3H₂ → CH₄ + H₂O

CO₂ + 4H₂ → CH₄ +2H₂O

To produce the desired end-product ammonia, the hydrogen is then catalytically reacted with nitrogen (derived from process air) to form anhydrous liquid ammonia. This step is known as the ammonia synthesis loop, also referred to as the Haber-Bosch process or the ammonia converter:

3H₂ + N₂ → 2NH₃

The synthesis of ammonia is achieved at a pressure as high as from 160 bar to 290 bar. This implies that the hydrogen and nitrogen gases are compressed in gas compressors. Typically, an ammonia converter comprises at least a compressor that can be operated both in a low-pressure mode at a pressure ranging from 60 bar to 140 bar, and in a high pressure mode at a pressure ranging from above 140 bar to 290 bar. A conventional manner to operate those compressors is through steam turbines. Typically, an ammonia converter comprises a high-pressure steam turbine working at a supply pressure ranging from 90 bar to 110 bar and a supply temperature ranging from 490 °C to 510 °C, and a low-pressure steam turbine working at a supply pressure ranging from 35 bar to 40 bar. The operation of the low-pressure steam turbine enables the operation of the compressor in a low-pressure mode, while the operation of the high-pressure steam turbine allows for the operation of the compressor in a high-pressure mode.

Due to the nature of the (typically multi-promoted magnetite) catalyst used in the ammonia synthesis reaction, only very low levels of oxygen-containing (especially CO, CO₂ and H₂O) compounds can be tolerated in the synthesis (hydrogen and nitrogen mixture) gas. Relatively pure nitrogen can be obtained by air separation, but additional oxygen removal may be required.

Because of relatively low single pass conversion rates (typically less than 20%), a large recycle stream is required. This can lead to the accumulation of inert gases in the loop gas.

It is essential that the catalyst used in the ammonia synthesis reaction is reduced, in order for the reaction between hydrogen and ammonia to be effective.

The steam reforming, shift conversion, carbon dioxide removal and methanation steps each operate at absolute pressures of about 25 to 35 bar, and the ammonia synthesis loop operates at absolute pressures ranging from 60 bar to 290 bar depending upon which proprietary design is used.

Steam reforming or steam methane reforming is a method for producing syngas (hydrogen and carbon monoxide) by reaction of hydrocarbons with water. Commonly natural gas is the feedstock. The natural gas is commonly referred to as the feed to the reforming unit. The main purpose of this technology is hydrogen production. The reaction is represented by this equilibrium:

CH₄ + H₂O 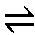

CO + 3 H₂ The reaction is strongly endothermic (ΔHᵣ = 206 kJ/mol) and consumes heat.

Steam reforming of natural gas produces 95% of the world's hydrogen of 500 billion m³ in 1998, or 70 million tons by 2018. Hydrogen is used in the industrial synthesis of ammonia and for the production of myriad other chemicals.

The reaction is conducted in a reformer vessel, where a high-pressure mixture of steam and methane are put into contact with a nickel catalyst. Catalysts with high surface-area-to-volume ratio are preferred because of diffusion limitations due to high operating temperature. Examples of catalyst shapes used are spoked wheels, gear wheels, and rings with holes. Additionally, these shapes have a low-pressure drop which is advantageous for this application. Catalysts are usually contained in tubes, which constitute a tube section of the reformer, in which natural gas is reformed in order to produce reformed gas, comprising a mixture of carbon monoxide and hydrogen gas. A typical steam methane reformer may contain from 180 to 325 tubes. As stated above, steam methane reforming is an endothermic reaction, hence a fuel gas must be supplied to furnace chamber that is surrounding the tubes of the tube section, in order for heat to be supplied to the natural gas and water as steam inside the tubes, upon burning of the fuel gas. The burning of the fuel gas results in the production of a flue gas that has a temperature ranging from 1000 to 1200 °C.

Via the water-gas shift reaction, additional hydrogen can be obtained by treating the carbon monoxide generated by steam reforming with water:

CO + H₂O 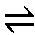 CO₂ + H₂

This latter reaction is mildly exothermic (produces heat, ΔHr= - 41 kJ/mol). For every ton of hydrogen produced this way, 9 tons of CO₂ are also produced. Steam reforming of natural gas is approximately 65 - 75% efficient.

Production of H₂ and CO from hydrocarbon gases (e.g. natural gas) can be performed by two well-known "primary" and "secondary" reformers. Steam methane reforming (SMR) and autothermal reformer (ATR) are two industrial examples of the primary and secondary reformers respectively. The process of combined reforming utilizes both of primary and secondary tools for production of synthesis gas, as it is commonly practiced in ammonia manufacturing.

Autothermal reforming (ATR) uses oxygen and carbon dioxide or steam in a reaction with methane to form hydrogen. The reaction takes place in a single chamber where the methane is partially oxidized. The reaction is exothermic due to the oxidation. When the ATR uses carbon dioxide the H₂:CO ratio produced is 1:1; when the ATR uses steam the H₂:CO ratio produced is 2.5:1. The reactions can be described in the following equations, using CO₂:

2 CH₄ + O₂ + CO₂ → 3 H₂ + 3 CO + H₂O

and using steam:

4 CH₄ + O₂ + 2 H₂O → 10 H₂ + 4 CO

The outlet temperature of hydrogen is between 950 - 1100 °C and outlet pressure can be as high as 100 bar.

The main difference between SMR and ATR is that SMR only uses air for combustion as a heat source to create steam, while ATR uses purified oxygen.

It results that steam can be produced from the heat generated by the reforming steps of the ammonia production process.

The desulfurisation unit, the primary and secondary reformers, the shift reactor, the CO₂ removal unit and the methanation unit form the so-called front end of an ammonia production unit, whereas the ammonia converter forms the so-called back end of an ammonia production unit.

The present disclosure is concerned with the step associated to the reduction of the catalyst in the ammonia converter. In practice, the front end is operated until synthesis gas is available at the level of the compressor suction in the ammonia converter and until high-pressure steam is available to drive the turbine for operating the compressor at a high pressure ranging from above 140 bar to 290 bar. The synthesis machine is operated and pressure is introduced in the synthesis loop with a load of synthesis gas that is typically 30-40% of the operating load once the catalyst is fully reduced. Throughout the reduction process, the load of synthesis gas in the ammonia converter is gradually increased to 80% to achieve full catalyst reduction. During such standard catalyst reduction an important amount of the synthesis gas is vented out of the process. Further, the production at the front end or any auxiliary boiler is increased to meet the requirement in steam of the high-pressure steam turbine, in order to operate the compressor at a high pressure ranging from above 140 bar to 290 bar. In order for the catalyst to be fully reduced, 3-5 days are necessary, depending on type of catalyst chosen. Therefore, the reduction of the catalyst of an ammonia converter involves the venting of an important quantity of synthesis gas, which is not environmentally friendly. Secondly, the process consumes a lot of energy both through the actual compression of the synthesis gas in the ammonia converter but also through the production of the synthesis gas. It is a goal of this disclosure to provide a process and corresponding system that allow the chemical reduction of the catalyst of an ammonia converter under more environmentally friendly conditions and at a lower energy cost.

### Prior art

One aspect of US4148866A (Pullman Incorporated, 1979) discloses an improved synthesis loop for the production of ammonia, has a low pressure, i.e., less than 100 atmospheres.

US3787335A (Wyeth Holdings LLC, 1971) discloses a process for reducing an iron oxide catalyst material useful in ammonia synthesis employing a gas consisting essentially of hydrogen, and substantially no gaseous component which will react under the conditions of reduction, a temperature of at least 450 °C and a pressure of at least 3.10 bar (45 psig).

US 10 040 692 B2 and US 4 568 531 A disclose processes for producing ammonia comprising a first and a second ammonia converter wherein the purge gas from the first ammonia converter is supplied to the second ammonia converter in order to increase ammonia conversion. Both converters comprise active catalysts.

### Summary

In one aspect, the disclosure describes the use of a purge gas essentially free of carbon monoxide and carbon dioxide and comprising nitrogen, hydrogen and ammonia, and optionally argon, directly produced from a converter of a first ammonia production unit comprising an active and reduced catalyst, in a method for reducing the catalyst of a converter of a second ammonia production unit comprising an inactive and oxidised catalyst.

Surprisingly, the inventors have found that this is not necessary to produce synthesis gas in order to achieve the reduction of the catalyst of an ammonia converter. The purge gas exiting a first ammonia converter plant can be used for feeding a second ammonia converter while the catalyst of ammonia converter is reduced. In this way, instead of being wasted, the purge gas of an active ammonia production unit, comprising an active catalyst in reduced form, is used for reducing the catalyst of a non-active ammonia production unit, comprising a catalyst in oxidized form, and ammonia can be produced in one production unit while another ammonia production unit is being reduced, thereby maximising the production of ammonia. This is a first advantage of the present disclosure. A further advantage of the use according to the invention is that not only is the purge gas of the converter of an active ammonia production unit not wasted, it is further not needed to produce additional synthesis gas for operating the converter of the non-active ammonia production unit, while the converter of this non-active unit is reduced. Consequently, the present disclosure allows for the reduction of the catalyst of an ammonia converter while minimizing the amounts of gases wasted and necessary for the process, which has positive impact on the environment and the corresponding energy consumption for the reduction process.

In another aspect, the disclosure describes a method for revamping an ammonia production system. The ammonia production system comprises at least two ammonia production units, each unit comprising an ammonia converter each having an inlet for receiving a process gas and an outlet for releasing a purge gas and the method comprises the step of fluidly connecting the inlet of the converter of a first ammonia production unit, comprising an inactive and oxidised catalyst, to the outlet of the converter of a second ammonia production unit, comprising an active and reduced catalyst, for transporting the purge gas being produced by the converter of the second ammonia production unit, to the converter of the first ammonia production unit.

In another aspect, the disclosure describes a method for the reduction of a catalyst in an ammonia converter, in an ammonia production system. The ammonia production system comprises at least two ammonia production units each comprising at least:
- an ammonia converter generating a purge gas at a pressure ranging from 140 bar to 290 bar, such as from 150 bar to 170 bar, and comprising:
   o a low-pressure steam turbine for operating a gas compressor at a pressure ranging from 35 bar to 40 bar; and
   ∘ a gas compressor operable at a pressure ranging from 60 bar to 90 bar;
wherein the method is characterised in that it comprises the steps of a) feeding low-pressure steam at a temperature ranging from 350 °C to 390 °C and at a pressure ranging from 35 bar to 40 bar to the low-pressure steam turbine of an ammonia converter of a first ammonia production unit, comprising an inactive and oxidised catalyst, thereby operating the compressor at a pressure ranging from 60 bar to 90 bar; and b) feeding the purge gas of a second ammonia production unit, comprising an active and reduced catalyst, at a flow ranging from 9000 Nm³/h to 16500 Nm³/h to the compressor of the converter of the first ammonia production unit.

In another aspect, the disclosure provides a system for the reduction of a catalyst in an ammonia converter each having an inlet for receiving a process gas and an outlet for releasing a purge gas, in an ammonia production system comprising at least two ammonia production units, each ammonia production unit comprising:
- the ammonia converter generating the purge gas at a pressure ranging from 140 bar to 290 bar, such as from 150 bar to 170 bar, and comprising:
   o means for receiving low pressure steam at a temperature ranging from 350 °C to 390 °C and at a pressure ranging from 35 bar to 40 bar for supplying a low-pressure steam turbine;
   o a low-pressure steam turbine for operating a gas compressor at a pressure ranging from 60 bar to 90 bar; and
   o the compressor for compressing a process gas essentially free of carbon monoxide and carbon dioxide and comprising mixtures of hydrogen, nitrogen and ammonia, or the purge gas, to a pressure ranging from 60 bar to 90 bar;
wherein the inlet of the converter of a first ammonia production unit, comprising an inactive and oxidised catalyst, is fluidly connected to the outlet of the converter of a second ammonia production unit, comprising an active and reduced catalyst.

### List of Figures

**Figure 1** shows a schematic representation of the configuration of two ammonia converters, according to the disclosure
**Figure 2** shows a schematic representation of an ammonia production unit comprising an ammonia converter configured according to the disclosure.

**List of numerals in Figures**

| | |
|---|---|
| **1** | ammonia converter of the second ammonia production unit |
| **2** | ammonia converter of the first ammonia production unit |
| **3** | outlet of the ammonia converter |
| **5** | inlet of the ammonia converter |
| **7** | purge gas |
| **8** | process gas |
| **9** | ammonia production system |
| **11** | sulfur removal unit |
| **19** | primary steam reformer |
| **24** | shift conversion unit |
| **28** | carbon dioxide removal unit |
| **32** | methanation unit |
| **53** | secondary reformer |
| **57** | low-pressure steam turbine of the second converter |
| **58** | low-pressure steam turbine of the first converter |
| **59** | gas compressor of the second converter |
| **60** | gas compressor of the first converter |
| **61** | low-pressure steam |
| **62** | high-pressure steam turbine of the first converter |
| **64** | means for receiving low pressure steam of the second ammonia converter |
| **65** | means for receiving low pressure steam of the first ammonia converter |
| **66** | ejector of the first converter |
| **67** | high-pressure steam turbine of the second converter |
| **69** | ejector of the second converter |
| **100** | second ammonia production unit |
| **200** | first ammonia production unit |
| **300** | front end of an ammonia production unit |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawings), or to any novel one, or any novel combination, of the steps of any method or process so disclosed.

The enumeration of numeric values by means of ranges of figures comprises all values and fractions in these ranges, as well as the cited end points. The term "ranges from ... to ..." as used when referring to a range for a measurable value, such as a parameter, an amount, a time period, and the like, is intended to include the limits associated to the range that is disclosed.

### Use

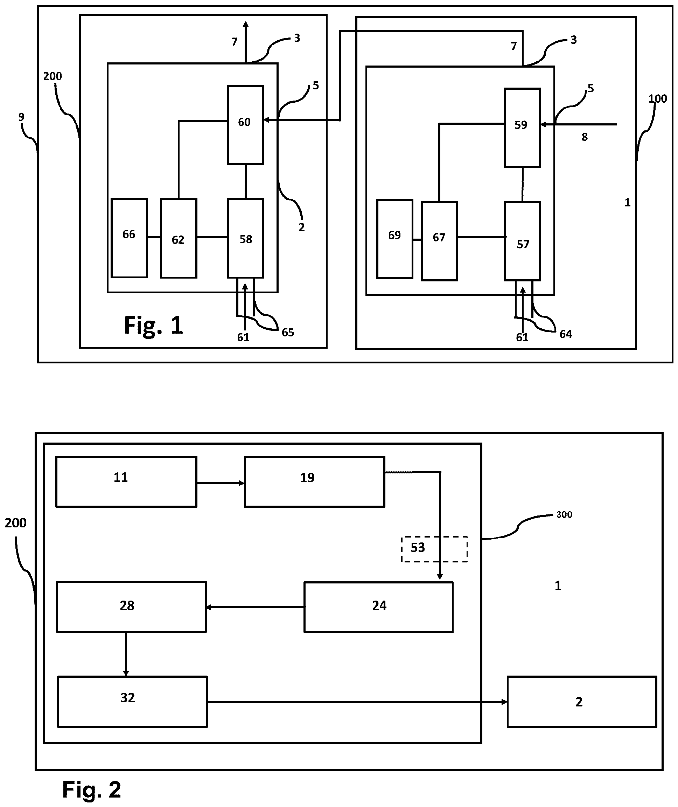

Reference is made to Figure 1. In one aspect, the disclosure describes the use of a purge gas (**7**) essentially free of carbon monoxide and carbon dioxide and comprising nitrogen, hydrogen and ammonia, and optionally argon, directly produced from a of a first ammonia production unit, in a method for reducing the catalyst of a converter (**2**) of a second ammonia production unit.

Surprisingly, the inventors have found that this is not necessary to produce synthesis gas in order to achieve the reduction of the catalyst of an ammonia converter. The purge gas exiting the ammonia converter plant, in particular an active ammonia converter, generating ammonia and comprising a catalyst which is reduced, i.e. in reduced form, can be used for feeding another ammonia converter, the catalyst of which is being reduced, i.e. in oxidized form. Therefore, according to the present disclosure, when a production site comprises at least two ammonia production unit, the purge gas exiting the converter of a first production unit actively producing ammonia, the catalyst of which is reduced, can be fed to the ammonia converter of another, non-active ammonia production unit, in which the catalyst needs to be reduced or is in the process of being reduced. In this way, instead of being wasted, the purge gas of an active ammonia production unit is used for reducing the catalyst of a non-active ammonia production unit and ammonia can be produced in one production unit while another ammonia production unit is being reduced, thereby maximising the production of ammonia. This is a first advantage of the present disclosure.

A further advantage of the use according to the invention is that not only is the purge gas coming out of an ammonia converter having an active catalyst not wasted, it is further not needed to produce additional synthesis gas for operating the converter of an ammonia production unit, the catalyst of which converter is to be reduced. As the production of synthesis gas is not required, no emission associated to such produced are generated.

The person skilled in the art will understand that while the converter a first production unit is reduced and the converter of a second production unit is being reduced, the reduced catalyst will eventually require new reduction while the catalyst being reduced will become fully reduced. Hence, the converter, the catalyst of which was being reduced, becomes the converter from which purge gas can be used to reduce the formerly active catalyst of the converter from which the purge gas was being used, in to reduce the formerly oxidized catalyst. Therefore, the result is that ammonia can be produced at all times at minimum waste of purge gas from the ammonia converter and minimum production of synthesis gas.

### Method for revamping

Reference is made to Figure 1. In another aspect, the disclosure describes a method for revamping a system. The system comprises at least two ammonia production units (**100**, **200**), each unit comprising an ammonia converter (**1, 2**) each having an inlet (**5**) for receiving a process gas (**8**) and an outlet (**3**) for releasing a purge gas (**7**) and the method comprises the step of fluidly connecting the inlet (**5**) of the converter (**2**) of a first ammonia production unit (**200**) to the outlet (**3**) of the converter (**1**) of a second ammonia production unit (**100**), comprising an active and reduced catalyst, for transporting the purge gas (**7**) being produced by the converter (**1**) of the second ammonia production unit (**100**), to the converter (**2**) of the first ammonia production unit (**200**), comprising an inactive and oxidised catalyst.

The present disclosure, therefore, provides for a method for revamping a system comprising two ammonia production unit, such as to connect the outlet of the ammonia converter of a first production unit to the inlet of a second production unit, thereby providing a system from which the user can benefit of the advantages of the disclosure.

### Method for reduction of a catalyst

Reference is made to Figure 1. In another aspect, the disclosure describes a method for the reduction of a catalyst in an ammonia converter, in an ammonia production system. The ammonia production system comprises at least two ammonia production units each comprising at least:
- an ammonia converter (**1, 2**) generating a purge gas (**7**) at a pressure ranging from 140 bar to 290 bar, such as from 150 bar to 170 bar, and comprising:
   o a low-pressure steam turbine (**57, 58**) for operating a gas compressor (**59, 60**) at a pressure ranging from 35 bar to 40 bar; and
   o a gas compressor (**59, 60**) operable at a pressure ranging from 60 bar to 90 bar.

The method is characterised in that it comprises the steps of a) feeding low-pressure steam (**61**) at a temperature ranging from 350 °C to 390 °C and at a pressure ranging from 35 bar to 40 bar to the low-pressure steam turbine (**58**) of an ammonia converter (**2**) of a first ammonia production unit (**200**), comprising an inactive and oxidised catalyst, thereby operating the compressor (**60**); and b) feeding the purge gas of a second ammonia production unit at a flow ranging from 9,000 Nm³/h to 16,500 Nm³/h to the compressor (**60**) of the converter (**2**) of the first ammonia production unit (**200**) comprising an inactive and oxidised catalyst.

It is understood that in the method according to the present disclosure, the ammonia converter (**1, 2**) each comprises a catalyst. In particular, the ammonia converter (**2**) of the first ammonia producing unit (**200**) comprises a catalyst in need of reduction or a catalyst which is in the process of being reduced, while the ammonia converter (**1**) of the second ammonia producing unit (**100**) comprises a reduced and active catalyst. In the present disclosure, the purge gas of the second ammonia producing unit (**100**) is contacted with the catalyst of the first ammonia producing unit (**200**).

Further, the person skilled in the art will understand that since the purge gas (**7**) has a different chemical composition than the typical synthesis gas, in order to ensure the safe operation of the converter (**2**), the typical antisurge control configuration of the compressor (**60**) is to be correspondingly adjusted.

A further advantage of the disclosure is that, not only can an ammonia converter be operated with the purge gas exiting another ammonia converter, in particular for the chemical reduction of the catalyst: during such catalyst reduction, it is not necessary to operate the compressor in the ammonia converter at high pressure, meaning the operation of a high-pressure steam turbine and the production of steam for operating the compressor at a pressure as high as from above 140 bar to 290 bar are not required. Consequently, not only is it not necessary to produce synthesis gas for operating an ammonia converter, the catalyst of which is being reduced, the production of high-pressure steam also is not required. Hence, quite clearly, the present disclosure presents considerable energy savings, generating in turn costs savings, in connection with the method for reducing an ammonia catalyst.

According to one embodiment the purge gas (**7**) is essentially free of carbon monoxide and carbon dioxide and comprising nitrogen, hydrogen and ammonia.

According to one embodiment of the method for the reduction of a catalyst, the purge gas (**7**) comprises nitrogen, hydrogen, ammonia and argon. This composition corresponds to a typical composition for a gas exiting an ammonia converter. Therefore, the present disclosure can be applied to common, available ammonia production units.

According to one embodiment of the method for the reduction of a catalyst, the purge gas (**7**) flow ranges from 10,000 Nm³/h to 15,500 Nm³/h. Such a flow is particularly suitable for operating the compressor of an ammonia converter while the catalyst of the converter is being reduced.

According to one embodiment of the method for the reduction of a catalyst, the purge gas (**7**) flow ranges from 12,000 Nm³/h to 13,500 Nm³/h.

Reference is made to Figure 2. According to one embodiment of the method for the reduction of a catalyst, the first ammonia production unit (**200**) further comprises:
- a front end (**300**) comprising:
   o a sulfur removal unit (**11**) for removing sulfur from a feed of natural gas;
   o a primary reformer (**19**) for converting a feed of natural gas essentially free of sulfur into a mixture of carbon monoxide and hydrogen;
   o optionally, a secondary reformer (**53**) for increasing the conversion of the feed of natural gas essentially free of sulfur into a mixture of carbon monoxide and hydrogen achieved in the primary reformer (**19**); and
   o a shift conversion unit (**24**) for converting the mixture of carbon monoxide and hydrogen produced in the primary reformer (**19**) or, optionally, in the secondary reformer (**53**) into a hydrogen and carbon dioxide mixture;
   o a carbon dioxide removal unit (**28**) for separating hydrogen from carbon dioxide in the hydrogen and carbon dioxide mixture produced in the shift conversion unit (**24**); and
   o a methanation unit (**32**) for converting remaining amounts of carbon monoxide and carbon dioxide into methane;
and the ammonia converter (**2**) of the first ammonia production unit (**200**) further comprises a high-pressure steam turbine (**62**) for operating the compressor (**60**) at a high pressure ranging from above 140 bar to 290 bar.

The method is characterised in that it further comprises the step of c) removing sulfur from a feed of natural gas in a sulfur removal unit (**11**) for producing a feed of natural gas essentially free of sulfur; d) converting the feed of natural gas essentially free of sulfur obtained in step c), using steam, into a mixture of carbon monoxide and hydrogen in the primary reformer (**19**); e) optionally, increasing the conversion of the feed of natural gas essentially free in sulfur, using oxygen, into a mixture of carbon monoxide and hydrogen achieved in the primary reformer (**19**) in step d), in the secondary reformer (**53**); f) converting the mixture of carbon monoxide and hydrogen obtained in step d), or optionally in step h), into a mixture of carbon dioxide and hydrogen in the shift conversion unit (**24**); g) feeding the gaseous mixture of carbon dioxide and hydrogen generated in step f) to the carbon dioxide removal unit (**28**), thereby producing hydrogen essentially free in carbon dioxide; and h) feeding the hydrogen produced in step g) to a methanation unit (**32**) for converting remaining amounts of carbon monoxide and carbon dioxide into methane; and i) recovering heat from steps f) and g) and, optionally, from step e), thereby producing high-pressure steam suitable for being fed to the high-pressure steam turbine (**62**).

From the present disclosure, the operation of the compressor at a high pressure ranging from above 140 bar to 290 bar, a high-pressure turbine, the operation of a front end generating synthesis gas and also the recovery of the heat generated by the production of synthesis gas for producing steam, are not required in connection in the production unit in which the catalyst of the ammonia converter is being reduced. Nonetheless, those non-indispensable method steps can be performed for producing synthesis gas and steam that can be used for other purposes than operating an ammonia converter.

Reference is made to Figures 1 and 2. According to one embodiment of the method for the reduction of a catalyst, the second ammonia production unit (**100**) comprises all the elements of the first ammonia production unit (**200**) and the steps c) to i) are correspondingly performed in the second ammonia production unit (**100**). In this manner and with reference to what has been described in connection with the use of the disclosure, both ammonia production units can be operated as ammonia production units comprising a converter with a reduced catalyst. In other words, both units have the capability of producing ammonia and ammonia can, therefore, be produced, even at times when the catalyst of the converter of one of the two units must be reduced.

### System

Reference is made to Figure 1. In another aspect, the disclosure provides a system for the reduction of a catalyst in an ammonia converter (**1, 2**) each having an inlet (**5**) for receiving a process gas (**8**) and an outlet (**3**) for releasing a purge gas (**7**), in an ammonia production system (**9**) comprising at least two ammonia production units (**100, 200**), each ammonia production unit comprising:
- the ammonia converter (**1, 2**) generating the purge gas (**7**) at a pressure ranging from 140 bar to 290 bar, such as from 150 bar to 170 bar, and comprising:
   - means for receiving low pressure steam (**64, 65**) at a temperature ranging from 350°C to 390 °C and at a pressure ranging from 35 bar to 40 bar for supplying a low-pressure steam turbine (**57, 58**);
   - a low-pressure steam turbine (**57, 58**) for operating a gas compressor (**59, 60**) at a pressure ranging from 60 bar to 90 bar; and
   - the compressor (**59, 60**) for compressing a process gas (**8**) essentially free of carbon monoxide and carbon dioxide and comprising mixtures of hydrogen, nitrogen and ammonia, and optionally argon, or the purge gas (**7**), to a pressure ranging from 60 bar to 90 bar;
wherein the inlet (**5**) of the converter (**2**) of a first ammonia production unit (**200**), comprising an inactive and oxidised catalyst is fluidly connected to the outlet (**3**) of the converter (**1**) of a second ammonia production unit (**100**), comprising an active and reduced catalyst.

It is understood that in the system according to the present disclosure, the ammonia converter (**1, 2**) each comprises a catalyst. The catalyst receives the gases compressed by the compressor (**59, 60**) and generates a gas stream comprising ammonia that is subsequently processed to generate an ammonia gas stream and the purge gas (**7**) expelled at the outlet (**3**) of the converter (**1, 2**). In particular, the ammonia converter (**2**) of the first ammonia producing unit (**200**) comprises a catalyst in need of reduction or a catalyst which is in the process of being reduced, while the ammonia converter (**1**) of the second ammonia producing unit (**100**) comprises a reduced and active catalyst. In the present disclosure, the purge gas of the second ammonia producing unit (**100**) is contacted with the catalyst of the first ammonia producing unit (**200**).

An advantage of the system of the disclosure is that the production unit in which the ammonia catalyst is being reduced does not necessitate a supply of synthesis gas. As the production of synthesis gas is not required, no emission associated to such produced are generated. Further, during catalyst reduction, the operation of the compressor at a high pressure ranging from above 140 bar to 290 bar in the ammonia converter is not necessary, meaning the presence of a high-pressure steam turbine and means for producing steam are also not required.

Consequently, not only is it not necessary for the system to comprise a front end for producing synthesis gas, means for producing steam also are not required. Hence, quite clearly, the system of the disclosure presents considerable equipment simplification and area footprint reduction, generating in turn costs savings, in relation with a system for reducing the catalyst of an ammonia converter.

Reference is made to Figure 2. According to one embodiment of the system of the disclosure, the first ammonia production unit (**200**) further comprises:
- a front end (**300**) comprising:
   o a sulfur removal unit (**11**) for removing sulfur from a feed of natural gas;
   o a primary reformer (**19**) for converting a feed of natural gas essentially free of sulfur into a mixture of carbon monoxide and hydrogen, in fluid communication with the sulfur removal unit (**11**);
   ∘ optionally, a secondary reformer (**53**) for increasing the conversion of the feed of natural gas essentially free of sulfur into a mixture of carbon monoxide and hydrogen achieved in the primary reformer (**19**), in fluid communication with the primary reformer (**19**); and
   o a shift conversion unit (**24**) for converting the mixture of carbon monoxide and hydrogen produced in the primary reformer (**19**) or, optionally, in the secondary reformer (**53**) into a hydrogen and carbon dioxide mixture, in fluid communication with the primary reformer (**19**) in the absence of the secondary reformer (**53**) or in fluid communication with the secondary reformer (**53**) in the presence of the secondary reformer (**53**);
   o a carbon dioxide removal unit (**28**) for separating hydrogen from carbon dioxide in the hydrogen and carbon dioxide mixture produced in the shift conversion unit (**26**), in fluid communication with the shift conversion unit (**24**); and
   o a methanation unit (**32**) for converting remaining amounts of carbon monoxide and carbon dioxide in the mixture produced in the shift conversion unit (**24**) into methane, in fluid communication with the shift conversion unit (**24**);
and the ammonia converter (**2**) of the first ammonia production unit (**200**) further comprises a high-pressure steam turbine (**62**) for operating the compressor (**60**) at a high pressure ranging from above 140 bar to 290 bar.

From the present disclosure the operation of the compressor at a high pressure ranging from above 140 bar to 290 bar, a high-pressure steam turbine, a front end generating synthesis gas and means for producing steam from the heat generated from the production of synthesis gas, are not required in connection in the production unit in which the catalyst of the ammonia converter is being reduced. Nonetheless, those non-indispensable elements can be present for producing synthesis gas and steam that can be used for other purposes than operating an ammonia converter.

Reference is made to Figure 1. According to one embodiment of the system of the disclosure, the converter (**2**) of the first ammonia production unit (**200**) further comprises an ejector (**66**) in order to avoid the overheating or distortion of the rotor of the high-pressure steam turbine (**62**). Indeed, considering that the low- and high-pressure steam turbine are mechanically connected, in order to avoid damages of the high-pressure steam turbine if only the low-pressure steam turbine is in operation, the evacuation of heat is beneficial. The presence of an ejector fulfils this purpose of evacuating heat.

Reference is made to Figures 1 and 2. According to one embodiment of the system of the disclosure, the second production unit (**100**) comprises all the elements of the first production unit (**200**). In this manner and with reference to what has been described in connection with the use of the disclosure, both ammonia production units are suitable as active ammonia production units. In other words, both units are suitable for producing ammonia and ammonia can, therefore, be produced, even at times when the catalyst of the converter of one of the two units must be reduced.

## Claims

1. Use of a purge gas essentially free of carbon monoxide and carbon dioxide and comprising nitrogen, hydrogen and ammonia, and optionally argon, directly produced from a converter of a first ammonia production unit, comprising an active and reduced catalyst, in a method for reducing an inactive and oxidised catalyst of a converter of a second ammonia production unit.

2. A method for revamping a system comprising at least two ammonia production units, each unit comprising an ammonia converter each having an inlet for receiving a process gas and an outlet for releasing a purge gas, comprising the step of fluidly connecting the inlet of the converter of a first ammonia production unit, comprising an inactive and oxidised catalyst, to the outlet of the converter of a second ammonia production unit, comprising an active and reduced catalyst, for transporting the purge gas being produced by the converter of the second ammonia production unit, to the converter of the first ammonia production unit.

3. A method for the reduction of a catalyst in an ammonia converter in an ammonia production system comprising at least a first and a second ammonia production unit, each ammonia production unit comprising at least:
• an ammonia converter generating a purge gas at a pressure ranging from above 140 bar to 290 bar and comprising:
∘ a low-pressure steam turbine for operating a gas compressor at a pressure ranging from 35 bar to 40 bar; and
∘ a gas compressor operable at a pressure ranging from 60 bar to 90 bar;
the method being **characterised in that** it comprises the steps of:
a) feeding low-pressure steam at a temperature ranging from 350 °C to 390 °C and at a pressure ranging from 35 bar to 40 bar to the low-pressure steam turbine of an ammonia converter of a first ammonia production unit, comprising an active and reduced catalyst, thereby operating the compressor; and
b) feeding the purge gas of the second ammonia production unit at a flow ranging from 9,000 Nm³/h to 16,500 Nm³/h to the compressor of the converter of the first ammonia production unit, comprising an inactive and oxidised catalyst.

4. The method according to claim 3, wherein the purge gas is essentially free of carbon monoxide and carbon dioxide and comprises nitrogen, hydrogen and ammonia.

5. The method according to claim 4, wherein the purge gas comprises nitrogen, hydrogen, ammonia and argon.

6. The method according to any one of claims 3 to 5, wherein the purge gas flow ranges from 10,000 Nm³/h to 15,500 Nm³/h.

7. The method according to claim 6, wherein the purge gas flow ranges from 12,000 Nm³/h to 13,500 Nm³/h.

8. The method according to any one of claims 3 to 7, wherein the first ammonia production unit further comprises:
• a front end comprising:
o a sulfur removal unit for removing sulfur from a feed of natural gas;
o a primary reformer for converting a feed of natural gas essentially free of sulfur into a mixture of carbon monoxide and hydrogen;
∘ optionally, a secondary reformer for increasing the conversion of the feed of natural gas essentially free of sulfur into a mixture of carbon monoxide and hydrogen achieved in the primary reformer; and
o a shift conversion unit for converting the mixture of carbon monoxide and hydrogen produced in the primary reformer or, optionally, in the secondary reformer into a hydrogen and carbon dioxide mixture;
o a carbon dioxide removal unit for separating hydrogen from carbon dioxide in the hydrogen and carbon dioxide mixture produced in the shift conversion unit; and
∘ a methanation unit for converting remaining amounts of carbon monoxide and carbon dioxide into methane; and
• the ammonia converter of the first ammonia production unit further comprising:
o a high-pressure steam turbine for operating the compressor at a high pressure ranging from above 140 bar to 290 bar;
further comprising the steps of:
c) removing sulfur from a feed of natural gas in a sulfur removal unit for producing a feed of natural gas essentially free of sulfur;
d) converting the feed of natural gas essentially free of sulfur obtained in step c), using steam, into a mixture of carbon monoxide and hydrogen in the primary reformer;
e) optionally, increasing the conversion of the feed of natural gas essentially free in sulfur, using oxygen, into a mixture of carbon monoxide and hydrogen achieved in the primary reformer in step d), in the secondary reformer;
f) converting the mixture of carbon monoxide and hydrogen obtained in step d), or optionally in step h), into a mixture of carbon dioxide and hydrogen in the shift conversion unit;
g) feeding the gaseous mixture of carbon dioxide and hydrogen generated in step f) to the carbon dioxide removal unit, thereby producing hydrogen essentially free in carbon dioxide; and
h) feeding the hydrogen produced in step g) to a methanation unit for converting remaining amounts of carbon monoxide and carbon dioxide into methane; and
i) recovering heat from steps f) and g) and, optionally, from step e), thereby producing high-pressure steam suitable for being fed to the high-pressure steam turbine.

9. The method according to claim 8, wherein the second ammonia production unit comprises all the elements of the first ammonia production unit and wherein the steps c) to i) are correspondingly performed in the second ammonia production unit.

10. A system for the reduction of a catalyst in an ammonia converter in an ammonia production system comprising at least a first and a second ammonia production unit, each ammonia production unit comprising:
• an ammonia converter having an inlet for receiving a process gas and an outlet for releasing a purge gas,
• the ammonia converter generating the purge gas at a pressure ranging from 140 bar to 290 bar and comprising:
o means for receiving low pressure steam at a temperature ranging from 350 °C to 390 °C and at a pressure ranging from 35 bar to 40 bar for supplying a low-pressure steam turbine;
o a low-pressure steam turbine for operating a gas compressor at a pressure ranging from 60 bar to 90 bar; and
o the compressor for compressing a process gas essentially free of carbon monoxide and carbon dioxide and comprising mixtures of hydrogen, nitrogen and ammonia, and optionally argon, or the purge gas, to a pressure ranging from 60 bar to 90 bar;
wherein the inlet of the converter of a first ammonia production unit, comprising an inactive and oxidised catalyst, is fluidly connected to the outlet of the converter of a second ammonia production unit, comprising an active and reduced catalyst.

11. The system according to claim 10, wherein the first ammonia production unit further comprises:
• a front end comprising:
o a sulfur removal unit for removing sulfur from a feed of natural gas;
o a primary reformer for converting a feed of natural gas essentially free of sulfur into a mixture of carbon monoxide and hydrogen, in fluid communication with the sulfur removal unit;
∘ optionally, a secondary reformer for increasing the conversion of the feed of natural gas essentially free of sulfur into a mixture of carbon monoxide and hydrogen achieved in the primary reformer, in fluid communication with the primary reformer; and
o a shift conversion unit for converting the mixture of carbon monoxide and hydrogen produced in the primary reformer or, optionally, in the secondary reformer into a hydrogen and carbon dioxide mixture, in fluid communication with the primary reformer in the absence of the secondary reformer or in fluid communication with the secondary reformer in the presence of the secondary reformer;
o a carbon dioxide removal unit for separating hydrogen from carbon dioxide in the hydrogen and carbon dioxide mixture produced in the shift conversion unit, in fluid communication with the shift conversion unit; and
o a methanation unit for converting remaining amounts of carbon monoxide and carbon dioxide in the mixture produced in the shift conversion unit into methane, in fluid communication with the shift conversion unit; and
• the ammonia converter of the first ammonia production unit further comprising:
o a high-pressure steam turbine for operating the compressor at a high pressure ranging from above 140 bar to 290 bar.

12. The system according to any one of claims 10 to 11, wherein the converter of the first ammonia production unit further comprises an ejector in order to avoid the overheating or distortion of the rotor of the high-pressure steam turbine.

13. The system according to any one of claims 10 to 12, wherein the second production unit comprises all the elements of the first production unit.

## Patentansprüche

1. Verwendung eines Spülgases, das im Wesentlichen frei von Kohlenmonoxid und Kohlendioxid ist und Stickstoff, Wasserstoff und Ammoniak und gegebenenfalls Argon umfasst, direkt erzeugt von einem Konverter einer ersten Ammoniakproduktionseinheit, der einen aktiven und reduzierten Katalysator umfasst, bei einem Verfahren zum Reduzieren eines inaktiven und oxidierten Katalysators eines Konverters einer zweiten Ammoniakproduktionseinheit.

2. Verfahren zum Auffrischen eines Systems, das wenigstens zwei Ammoniakproduktionseinheiten umfasst, wobei jede Einheit einen Ammoniakkonverter umfasst, der jeweils einen Einlass zum Aufnehmen eines Prozessgases und einen Auslass zum Ausgeben eines Spülgases aufweist, umfassend den Schritt des fluidischen Verbindens des Einlasses des Konverters einer ersten Ammoniakproduktionseinheit, die einen inaktiven und oxidierten Katalysator umfasst, mit dem Auslass des Konverters einer zweiten Ammoniakproduktionseinheit, die einen aktiven und reduzierten Katalysator umfasst, zum Befördern des von dem Konverter der zweiten Ammoniakproduktionseinheit erzeugten Spülgases zu dem Konverter der ersten Ammoniakproduktionseinheit.

3. Verfahren zur Reduktion eines Katalysators in einem Ammoniakkonverter in einem Ammoniakproduktionssystem, das wenigstens eine erste und eine zweite Ammoniakproduktionseinheit umfasst, wobei jede Ammoniakproduktionseinheit wenigstens umfasst:
• einen Ammoniakkonverter, der ein Spülgas mit einem Druck in dem Bereich von über 140 bar bis 290 bar erzeugt und umfasst:
∘ eine Niederdruckdampfturbine zum Betreiben eines Gaskompressors bei einem Druck in dem Bereich von 35 bar bis 40 bar; und
o einen Gaskompressor, der bei einem Druck in dem Bereich von 60 bar bis 90 bar betreibbar ist;
wobei das Verfahren **dadurch gekennzeichnet ist, dass** es die Schritte umfasst:
a) Zuführen von Niederdruckdampf mit einer Temperatur in dem Bereich von 350 °C bis 390 °C und einem Druck in dem Bereich von 35 bar bis 40 bar zu der Niederdruckdampfturbine eines Ammoniakkonverters einer ersten Ammoniakproduktionseinheit, die einen aktiven und reduzierten Katalysator umfasst, um den Kompressor zu betreiben; und
b) Zuführen des Spülgases der zweiten Ammoniakproduktionseinheit mit einem Fluss in dem Bereich von 9.000 Nm³/h bis 16.500 Nm³/h zu dem Kompressor des Konverters der ersten Ammoniakproduktionseinheit, der einen inaktiven und oxidierten Katalysator umfasst.

4. Verfahren nach Anspruch 3, wobei das Spülgas im Wesentlichen frei von Kohlenmonoxid und Kohlendioxid ist und Stickstoff, Wasserstoff und Ammoniak umfasst.

5. Verfahren nach Anspruch 4, wobei das Spülgas Stickstoff, Wasserstoff, Ammoniak und Argon umfasst.

6. Verfahren nach einem der Ansprüche 3 bis 5, wobei der Spülgasfluss in dem Bereich von 10.000 Nm³/h bis 15.500 Nm³/h liegt.

7. Verfahren nach Anspruch 6, wobei der Spülgasfluss in dem Bereich von 12.000 Nm³/h bis 13.500 Nm³/h liegt.

8. Verfahren nach einem der Ansprüche 3 bis 7, wobei die erste Ammoniakproduktionseinheit ferner umfasst:
• ein vorderes Ende umfassend:
o eine Schwefelentfernungseinheit zum Entfernen von Schwefel aus einer Erdgaszufuhr;
o einen primären Reformer zum Umwandeln einer im Wesentlichen schwefelfreien Erdgaszufuhr in ein Gemisch von Kohlenmonoxid und Wasserstoff;
o gegebenenfalls einen sekundären Reformer zum Erhöhen der in dem primären Reformer erzielten Umwandlung der im Wesentlichen schwefelfreien Erdgaszufuhr in ein Gemisch von Kohlenmonoxid und Wasserstoff; und
o eine Shift-Konversionseinheit zum Umwandeln des in dem primären Reformer oder gegebenenfalls in dem sekundären Reformer erzeugten Gemischs von Kohlenmonoxid und Wasserstoff in ein Gemisch von Wasserstoff und Kohlendioxid;
o eine Kohlendioxidentfernungseinheit zum Trennen von Wasserstoff und Kohlendioxid in dem in der Shift-Konversionseinheit erzeugten Gemisch von Wasserstoff und Kohlendioxid; und
o eine Methanisierungseinheit zum Umwandeln von verbleibenden Mengen von Kohlenmonoxid und Kohlendioxid zu Methan; und
• wobei der Ammoniakkonverter der ersten Ammoniakproduktionseinheit ferner umfasst:
∘ eine Hochdruckdampfturbine zum Betreiben des Kompressors bei einem hohen Druck in dem Bereich von über 140 bar bis 290 bar;
ferner umfassend die Schritte:
c) Entfernen von Schwefel aus einer Erdgaszufuhr in einer Schwefelentfernungseinheit, um eine im Wesentlichen schwefelfreie Erdgaszufuhr zu erzeugen;
d) Umwandeln der bei Schritt c) erhaltenen im Wesentlichen schwefelfreien Erdgaszufuhr unter Verwendung von Dampf in ein Gemisch von Kohlenmonoxid und Wasserstoff in dem primären Reformer;
e) gegebenenfalls Erhöhen der Umwandlung der bei Schritt d) in dem primären Reformer erzielten im Wesentlichen schwefelfreien Erdgaszufuhr unter Verwendung von Sauerstoff in ein Gemisch von Kohlenmonoxid und Wasserstoff in dem sekundären Reformer;
f) Umwandeln des bei Schritt d) oder gegebenenfalls bei Schritt h) erhaltenen Gemischs von Kohlenmonoxid und Wasserstoff in ein Gemisch von Kohlendioxid und Wasserstoff in der Shift-Konversionseinheit;
g) Zuführen des bei Schritt f) erzeugten gasförmigen Gemischs von Kohlendioxid und Wasserstoff zu der Kohlendioxidentfernungseinheit, um im Wesentlichen kohlendioxidfreien Wasserstoff zu erzeugen; und
h) Zuführen des bei Schritt g) erzeugten Wasserstoffs zu einer Methanisierungseinheit zur Umwandlung von verbleibenden Mengen von Kohlenmonoxid und Kohlendioxid zu Methan; und
i) Rückgewinnen von Wärme aus den Schritten f) und g) und gegebenenfalls aus Schritt e), um Hochdruckdampf zu erzeugen, der zur Zuführung zu der Hochdruckdampfturbine geeignet ist.

9. Verfahren nach Anspruch 8, wobei die zweite Ammoniakproduktionseinheit alle Elemente der ersten Ammoniakproduktionseinheit umfasst und wobei die Schritte c) bis i) entsprechend in der zweiten Ammoniakproduktionseinheit durchgeführt werden.

10. System zur Reduktion eines Katalysators in einem Ammoniakkonverter in einem Ammoniakproduktionssystem, das wenigstens eine erste und eine zweite Ammoniakproduktionseinheit umfasst, wobei jede Ammoniakproduktionseinheit umfasst:
• einen Ammoniakkonverter mit einem Einlass zum Aufnehmen eines Prozessgases und einem Auslass zum Ausgeben eines Spülgases,
• wobei der Ammoniakkonverter das Spülgas mit einem Druck in dem Bereich von 140 bar bis 290 bar erzeugt und umfasst:
o Mittel zum Aufnehmen von Niederdruckdampf mit einer Temperatur in dem Bereich von 350 °C bis 390 °C und bei einem Druck in dem Bereich von 35 bar bis 40 bar zur Versorgung einer Niederdruckdampfturbine;
o eine Niederdruckdampfturbine zum Betreiben eines Gaskompressors bei einem Druck in dem Bereich von 60 bar bis 90 bar; und
∘ den Kompressor zum Verdichten eines Prozessgases, das im Wesentlichen frei von Kohlenmonoxid und Kohlendioxid ist und Gemische von Wasserstoff, Stickstoff und Ammoniak und gegebenenfalls Argon oder das Spülgas umfasst, auf einen Druck in dem Bereich von 60 bar bis 90 bar;
wobei der Einlass des Konverters einer ersten Ammoniakproduktionseinheit, die einen inaktiven und oxidierten Katalysator umfasst, in Fluidverbindung mit dem Auslass des Konverters einer zweiten Ammoniakproduktionseinheit steht, die einen aktiven und reduzierten Katalysator umfasst.

11. System nach Anspruch 10, wobei die erste Ammoniakproduktionseinheit ferner umfasst:
• ein vorderes Ende umfassend:
o eine Schwefelentfernungseinheit zum Entfernen von Schwefel aus einer Erdgaszufuhr;
o einen primären Reformer zum Umwandeln einer im Wesentlichen schwefelfreien Erdgaszufuhr in ein Gemisch von Kohlenmonoxid und Wasserstoff, in flüssige Kommunikation mit der Schwefelentfernungseinheit;
o gegebenenfalls einen sekundären Reformer zum Erhöhen der in dem primären Reformer erzielten Umwandlung der im Wesentlichen schwefelfreien Erdgaszufuhr in ein Gemisch von Kohlenmonoxid und Wasserstoff, in flüssige Kommunikation mit dem primären Reformer; und
o eine Shift-Konversionseinheit zum Umwandeln des Gemischs von Kohlenmonoxid und Wasserstoff, das in dem primären Reformer oder gegebenenfalls in dem sekundären Reformer erzeugt wird, in ein Gemisch von Wasserstoff und Kohlendioxid, in flüssige Kommunikation mit dem primären Reformer bei Nichtvorhandensein des sekundären Reformers oder in flüssige Kommunikation mit dem sekundären Reformer bei Vorhandensein des sekundären Reformers;
o eine Kohlendioxidentfernungseinheit zum Trennen von Wasserstoff und Kohlendioxid in dem in dem Shift-Konversionseinheit erzeugten Gemisch von Wasserstoff und Kohlendioxid, in flüssige Kommunikation mit der Shift-Konversionseinheit; und
o eine Methanisierungseinheit zum Umwandeln von verbleibenden Mengen von Kohlenmonoxid und Kohlendioxid in dem in der Shift-Konversionseinheit erzeugten Gemisch zu Methan, in flüssige Kommunikation mit der Shift-Konversionseinheit; und
• wobei der Ammoniakkonverter der ersten Ammoniakproduktionseinheit ferner umfasst:
∘ eine Hochdruckdampfturbine zum Betreiben des Kompressors bei einem hohen Druck in dem Bereich von über 140 bar bis 290 bar.

12. System nach einem der Ansprüche 10 bis 11, wobei der Konverter der ersten Ammoniakproduktionseinheit ferner einen Ejektor umfasst, um Überhitzung oder Verformung des Rotors der Hochdruckdampfturbine zu verhindern.

13. System nach einem der Ansprüche 10 bis 12, wobei die zweite Produktionseinheit alle Elemente der ersten Produktionseinheit umfasst.

## Revendications

1. Utilisation d'un gaz de purge essentiellement exempt de monoxyde de carbone et de dioxyde de carbone et comprenant de l'azote, de l'hydrogène et de l'ammoniac, et éventuellement de l'argon, produit directement à partir d'un convertisseur d'une première unité de production d'ammoniac, comprenant un catalyseur actif et réduit, dans un procédé de réduction d'un catalyseur inactif et oxydé d'un convertisseur d'une seconde unité de production d'ammoniac.

2. Procédé de rénovation d'un système comprenant au moins deux unités de production d'ammoniac, chaque unité comprenant un convertisseur d'ammoniac ayant chacun une entrée pour recevoir un gaz de procédé et une sortie pour libérer un gaz de purge, comprenant l'étape de connexion de manière fluidique de l'entrée du convertisseur d'une première unité de production d'ammoniac, comprenant un catalyseur inactif et oxydé, à la sortie du convertisseur d'une seconde unité de production d'ammoniac, comprenant un catalyseur actif et réduit, pour transporter le gaz de purge produit par le convertisseur de la seconde unité de production d'ammoniac vers le convertisseur de la première unité de production d'ammoniac.

3. Procédé de réduction d'un catalyseur dans un convertisseur d'ammoniac dans un système de production d'ammoniac comprenant au moins une première et une seconde unité de production d'ammoniac, chaque unité de production d'ammoniac comprenant au moins :
• un convertisseur d'ammoniac générant un gaz de purge à une pression dans la plage de plus de 140 bars à 290 bars et comprenant :
o une turbine à vapeur basse pression pour exploiter un compresseur de gaz à une pression dans la plage de 35 bars à 40 bars ; et
o un compresseur de gaz pouvant être exploité à une pression dans la plage de 60 bars à 90 bars ;
le procédé étant **caractérisé en ce qu'**il comprend les étapes de :
a) alimentation en vapeur basse pression à une température dans la plage de 350 °C à 390 °C et à une pression dans la plage de 35 bars à 40 bars à la turbine à vapeur basse pression d'un convertisseur d'ammoniac d'une première unité de production d'ammoniac, comprenant un catalyseur actif et réduit, exploitant ainsi le compresseur ; et
b) alimentation du gaz de purge de la deuxième unité de production d'ammoniac à un débit dans la plage de 9 000 Nm³/h à 16 500 Nm³/h au compresseur du convertisseur de la première unité de production d'ammoniac, comprenant un catalyseur inactif et oxydé.

4. Procédé selon la revendication 3, dans lequel le gaz de purge est essentiellement exempt de monoxyde de carbone et de dioxyde de carbone et comprend de l'azote, de l'hydrogène et de l'ammoniac.

5. Procédé selon la revendication 4, dans lequel le gaz de purge comprend de l'azote, de l'hydrogène, de l'ammoniac et de l'argon.

6. Procédé selon l'une quelconque des revendications 3 à 5, dans lequel le débit de gaz de purge est dans la plage de 10 000 Nm³/h à 15 500 Nm³/h.

7. Procédé selon la revendication 6, dans lequel le débit de gaz de purge est dans la plage de 12 000 Nm³/h à 13 500 Nm³/h.

8. Procédé selon l'une quelconque des revendications 3 à 7, dans lequel la première unité de production d'ammoniac comprend en outre :
• une extrémité avant comprenant :
o une unité d'élimination de soufre pour éliminer du soufre d'une charge de gaz naturel ;
o un reformeur primaire pour convertir une charge de gaz naturel essentiellement exempte de soufre en un mélange de monoxyde de carbone et d'hydrogène ;
o éventuellement, un reformeur secondaire pour augmenter la conversion de la charge de gaz naturel essentiellement exempte de soufre en un mélange de monoxyde de carbone et d'hydrogène obtenu dans le reformeur primaire ; et
o une unité de conversion par déplacement pour convertir le mélange de monoxyde de carbone et d'hydrogène produit dans le reformeur primaire ou, éventuellement, dans le reformeur secondaire en un mélange d'hydrogène et de dioxyde de carbone ;
o une unité d'élimination du dioxyde de carbone pour séparer l'hydrogène du dioxyde de carbone dans le mélange d'hydrogène et de dioxyde de carbone produit dans l'unité de conversion par déplacement ; et
o une unité de méthanation pour convertir des quantités restantes de monoxyde de carbone et de dioxyde de carbone en méthane ; et
• le convertisseur d'ammoniac de la première unité de production d'ammoniac comprenant en outre :
o une turbine à vapeur haute pression pour exploiter le compresseur à une haute pression dans la plage de plus de 140 bars à 290 bars ;
comprenant en outre les étapes de :
c) élimination de soufre d'une charge de gaz naturel dans une unité d'élimination du soufre pour produire une charge de gaz naturel essentiellement exempte de soufre ;
d) conversion de la charge de gaz naturel essentiellement exempte de soufre obtenue à l'étape c), à l'aide de vapeur, en un mélange de monoxyde de carbone et d'hydrogène dans le reformeur primaire ;
e) éventuellement, augmentation de la conversion de la charge de gaz naturel essentiellement exempte de soufre, en utilisant de l'oxygène, en un mélange de monoxyde de carbone et d'hydrogène réalisé dans le reformeur primaire à l'étape d), dans le reformeur secondaire ;
f) conversion du mélange de monoxyde de carbone et d'hydrogène obtenu à l'étape d), ou éventuellement à l'étape h), en un mélange de dioxyde de carbone et d'hydrogène dans l'unité de conversion par déplacement ;
g) alimentation du mélange gazeux de dioxyde de carbone et d'hydrogène généré à l'étape f) à l'unité d'élimination de dioxyde de carbone, produisant ainsi de l'hydrogène essentiellement exempt de dioxyde de carbone ; et
h) alimentation de l'hydrogène produit à l'étape g) à une unité de méthanation pour convertir des quantités restantes de monoxyde de carbone et de dioxyde de carbone en méthane ; et
i) récupération de chaleur issue des étapes f) et g) et éventuellement de l'étape e), produisant ainsi de la vapeur haute pression apte à être alimentée dans la turbine à vapeur haute pression.

9. Procédé selon la revendication 8, dans lequel la seconde unité de production d'ammoniac comprend tous les éléments de la première unité de production d'ammoniac et dans lequel les étapes c) à i) sont réalisées de manière correspondante dans la seconde unité de production d'ammoniac.

10. Système pour la réduction d'un catalyseur dans un convertisseur d'ammoniac dans un système de production d'ammoniac comprenant au moins une première et une seconde unités de production d'ammoniac, chaque unité de production d'ammoniac comprenant :
• un convertisseur d'ammoniac ayant une entrée pour recevoir un gaz de procédé et une sortie pour libérer un gaz de purge,
• le convertisseur d'ammoniac générant le gaz de purge à une pression dans la plage de 140 bars à 290 bars et comprenant :
o un moyen pour recevoir de la vapeur basse pression à une température dans la plage de 350 °C à 390 °C et à une pression dans la plage de 35 bars à 40 bars pour ravitailler une turbine à vapeur basse pression ;
o une turbine à vapeur basse pression pour exploiter un compresseur de gaz à une pression dans la plage de 60 bars à 90 bars ; et
o le compresseur pour comprimer un gaz de procédé essentiellement exempt de monoxyde de carbone et de dioxyde de carbone et comprenant des mélanges d'hydrogène, d'azote et d'ammoniac, et éventuellement de l'argon, ou le gaz de purge, jusqu'à une pression dans la plage de 60 bars à 90 bars ;
dans lequel l'entrée du convertisseur d'une première unité de production d'ammoniac, comprenant un catalyseur inactif et oxydé, est connectée de manière fluidique à la sortie du convertisseur d'une seconde unité de production d'ammoniac, comprenant un catalyseur actif et réduit.

11. Système selon la revendication 10, dans lequel la première unité de production d'ammoniac comprend en outre
• une extrémité avant comprenant :
o une unité d'élimination de soufre pour éliminer du soufre d'une charge de gaz naturel ;
o un reformeur primaire pour convertir une charge de gaz naturel essentiellement exempte de soufre en un mélange de monoxyde de carbone et d'hydrogène, en communication fluidique avec l'unité d'élimination de soufre ;
o éventuellement, un reformeur secondaire pour augmenter la conversion de la charge de gaz naturel essentiellement exempte de soufre en un mélange de monoxyde de carbone et d'hydrogène réalisé dans le reformeur primaire, en communication fluidique avec le reformeur primaire ; et
o une unité de conversion par déplacement pour convertir le mélange de monoxyde de carbone et d'hydrogène produit dans le reformeur primaire ou, éventuellement, dans le reformeur secondaire en un mélange d'hydrogène et de dioxyde de carbone, en communication fluidique avec le reformeur primaire en l'absence du reformeur secondaire ou en communication fluidique avec le reformeur secondaire en présence du reformeur secondaire ;
o une unité d'élimination de dioxyde de carbone pour séparer l'hydrogène du dioxyde de carbone dans le mélange d'hydrogène et de dioxyde de carbone produit dans l'unité de conversion par déplacement, en communication fluidique avec l'unité de conversion par déplacement ; et
o une unité de méthanation pour convertir les quantités restantes de monoxyde de carbone et de dioxyde de carbone dans le mélange produit dans l'unité de conversion par déplacement en méthane, en communication fluidique avec l'unité de conversion par déplacement ; et
• le convertisseur d'ammoniac de la première unité de production d'ammoniac comprenant en outre :
o une turbine à vapeur haute pression permettant d'exploiter le compresseur à une haute pression dans la plage de plus de 140 bars à 290 bar.

12. Système selon l'une quelconque des revendications 10 à 11, dans lequel le convertisseur de la première unité de production d'ammoniac comprend en outre un éjecteur afin d'éviter la surchauffe ou la distorsion du rotor de la turbine à vapeur haute pression.

13. Système selon l'une quelconque des revendications 10 à 12, dans lequel la seconde unité de production comprend tous les éléments de la première unité de production.
